# EUROPÄISCHE PATENTANMELDUNG

(11) **EP 0 926 797 A2**
(43) Veröffentlichungstag der Anmeldung: **30.06.1999**
(21) Anmeldenummer: 98811240.5
(22) Anmeldetag: 17.12.1998
(51) Int. Cl.: H02H 9/02

(54) **Vorrichtungen zur Überstrombegrenzung**

(30) Priorität: 19.12.1997 DE 9756624 U
(71) Anmelder: ABB RESEARCH LTD., 8050 Zürich (CH)
(72) Erfinder: Chen, Makan,Dr., 5405 Baden-Dättwil (CH); Lakner, Martin,Dr., 5413 Birmenstorf (CH); Paul, Willi,Dr., 5430 Wettingen (CH)
(74) Vertreter: Clerc, Natalia

(57) **Zusammenfassung**

Überstrombegrenzer (1) auf der Basis von Hochtemperatursupraleitern (SLa, SLb) haben eine geringe Verfügbarkeit auf Grund von Inhomogenitäten in den Hochtemperatursupraleitern, die zu heißen Stellen (hot spots) führen, wenn keine stabilisierende Maßnahmen ergriffen werden. Zur Erhöhung der Verfügbarkeit wird in mindestens einem Parallelstromzweig zu einem 1. Hochtemperatursupraleiter (SLa) mindestens ein induktiver Widerstand (3) vorgesehen. Vorteilhafterweise ist in mindestens einem weiteren Parallelstromzweig zu diesem 1. Hochtemperatursupraleiter (SLa) mindestens ein weiterer Hochtemperatursupraleiter (SLb) mit einem Schalter (Sb) in Reihe geschaltet. Parallel zu mindestens zwei Abschnitten eines Hochtemperatursupraleiters (SLa, SLb) oder parallel zu mindestens zwei in Reihe geschalteten Hochtemperatursupraleitern kann je ein Varistor und/oder ein induktiver Widerstand geschaltet sein.

## Beschreibung

### TECHNISCHES GEBIET

Bei der Erfindung wird ausgegangen von einer Vorrichtung zur Überstrombegrenzung nach dem Oberbegriff des Patentanspruchs 1. .

### STAND DER TECHNIK

Aus der DE 4434819 C1 ist ein kompakt aufgebauter, reversibler Überstrombegrenzer mit mehreren in Reihe geschalteten Strombegrenzermodulen bekannt, wobei beiderseits eines scheibenförmigen Isolators je ein mäanderförmiger Leiterverbund aus einem Hochtemperatursupraleiter und einem Normalleiter in gutleitendem, flächenhaftem Kontakt vorgesehen sein kann. Zwischen dem Hochtemperatursupraleiter und dem Normalleiter ist eine 2 µm dicke Silberschicht angeordnet. Der Leiterverbund kann supraleiterseitig oder normalleiterseitig mit dem Isolator flächenhaft kontaktiert sein. Das Parallelschalten eines Normalleiters zu einem Supraleiter führt zu einer weitgehenden Homogenisierung der Spannungsverteilung längs des Supraleiters. Dennoch findet man beim Hintereinanderschalten verschiedener supraleitender Elemente unterschiedliche Spannungsabfälle über diesen. Da nun jedes supraleitende Element nur eine bestimmte maximale Spannung tragen kann, ist die Belastbarkeit der Serienschaltung um so niedriger, je inhomogener die Spannung verteilt ist. Die Schaltleistung einer Reihenschaltung von n supraleitenden Elementen erreicht bei weitem nicht die n-fache Schaltleistung eines Elements.

Die Erfindung nimmt auf einen Stand der Technik Bezug, wie er aus Patent Abstracts of Japan, E-759, 1989, Vol. 13 No. 213 oder der EP 0406636 A1 bekannt ist. Bei dem in der EP 0406636 A1 angegebenen Überstrombegrenzer ist eine Drosselspule in einem Parallelzweig zu einem oxidischen, stark magnetfeldabhängigen Hochtemperatursupraleiter geschaltet. Der Hochtemperatursupraleiter ist innerhalb der Drosselspule angeordnet. In Reihe zu der Drosselspule ist ein Spulenvorwiderstand geschaltet. Parallel zum Hochtemperatursupraleiter kann ferner ein nichtsupraleitender Nebenschlußwiderstand und ein Öffner angeordnet sein. Der Öffner öffnet bei einem Kurzschluß innerhalb 1 ms durch ein externes Signal. Danach erhöht der stromführende Hochtemperatursupraleiter seinen Widerstand mit einer einstellbaren Schaltverzögerung im Bereich von 0,5 ms - 5 ms und begrenzt den Kurzschlußstrom.

Ein mehrmals und / oder über längere Zeit belasteter Hochtemperatursupraleiter neigt während der Strombegrenzung vermehrt zur Ausbildung von lokalen heißen Stellen, und die Ausfallwahrscheinlichkeit steigt entsprechend an. Durch mitunter sehr kleine Inhomogenitäten, z. B. in der kritischen Stromdichte, kommt es zu lokalen Überhöhungen der elektrischen Spannung. Dies führt zu einer verstärkten Energiedissipation und damit zu einer Aufwärmung an dieser Stelle. Die Folge sind zunehmende lokale Überhöhungen des Widerstandes und damit des Spannungsabfalls. Bei langer Belastung führt dieser Effekt zur lokalen Zerstörung des Supraleiters. Ein weiteres Problem hinsichtlich der Verfügbarkeit von Überstrombegrenzern ist deren Erholzeit, die nach einem Strombegrenzungsfall verstreicht, bis der Übertrombegrenzer wieder seinen Nennstrom führen kann. Diese Zeitdauer ist in der Regel deutlich höher als 100 ms, was für Anwendungen mit automatischer Wiedereinschaltung von Stromnetzen unerwünscht lang ist.

### DARSTELLUNG DER ERFINDUNG

Die Erfindung, wie sie im Patentanspruch 1 definiert ist, löst die Aufgabe, eine Vorrichtung zur Überstrombegrenzung der eingangs genannten Art derart weiterzuentwickeln, daß deren Verfügbarkeit verbessert wird.

Vorteilhafte Ausgestaltungen der Erfindung sind in den abhängigen Patentansprüchen definiert.

Ein Vorteil der Erfindung besteht darin, daß die Lebensdauer der Vorrichtung zur Überstrombegrenzung erhöht werden kann.

Gemäß einer vorteilhaften Ausgestaltung der Erfindung wird durch ein Parallelschalten von Varistoren zu supraleitenden Elementen die Stabilität von Strombegrenzern wesentlich verbessert. Die Varistorelemente garantieren eine Homogenität der Spannungsabfälle an den supraleitenden Elementen auf ± 5 % und erhöhen dadurch die Gesamtleistung des Überstrombegrenzers.

In einem Parallelzweig zu einer Serieschaltung aus einem 1. Supraleiter und einem Schalter ist ein induktiver Widerstand, insbesondere eine Drosselspule, vorgesehen. Wird der Schalter nach erfolgter Kurzschlussstrombegrenzung zum Schutz des Supraleiters geöffnet, fliesst der Strom nur noch über die Drosselspule. Der nicht mehr belastete Supraleiter kann sich bereits wieder erholen und abkühlen ohne dass dazu der Stromkreis unterbrochen werden muss.

Mit einem 2. Supraleiter in einem Parallelzweig zu einem 1. Supraleiter kann in Verbindung mit einem Wechselschalter ebenfalls eine kleinere Erholzeit nach einer erfolgten Strombegrenzung erreicht werden. Zudem lässt sich durch ein Parallelschalten der zwei Supraleiter die Nennleistung des Überstrombegrenzers kurzfristig verdoppeln.

### KURZE BESCHREIBUNG DER ZEICHNUNGEN

Die Erfindung wird nachstehend anhand von Ausführungsbeispielen erläutert. Es zeigen:
- Fig. 1: eine Prinzipdarstellung eines an eine Stromleitung angeschlossenen Überstrombegrenzers,
- Fig. 2: eine weitere Ausführung eines Überstrombegrenzers mit mehreren zu Supraleitern oder Supraleiterabschnitten parallelgeschalteten Varistoren und
- Fig. 3: eine Variante zu dem Überstrombegrenzer von Fig. 1 mit 2 Supraleitern in zueinander parallelen Stromzweigen.

### WEGE ZUR AUSFÜHRUNG DER ERFINDUNG

In den Figuren sind gleiche Teile mit gleichen Bezugszeichen gekennzeichnet.

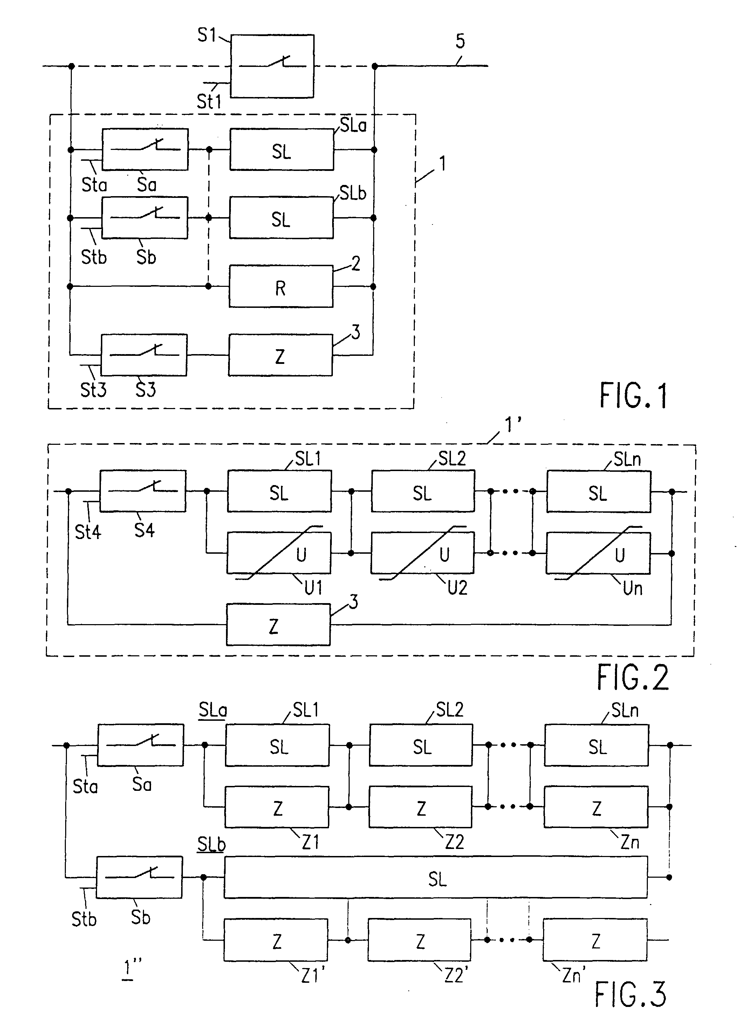

Fig. 1 zeigt eine gegen Überströme zu schützende Stromleitung (5) mit einem Öffner bzw. Schalter (S1), welcher durch ein externes Steuersignal (St1) steuerbar ist. Parallel zu dem Schalter (S1) ist ein Überstrombegrenzer (1) mit 4 Stromzweigen geschaltet, welcher im Falle eines Öffnens des Schalters (S1) einen Überstrom in der Stromleitung (5) übernimmt und auf einen vorgebbaren Wert begrenzt. In der einfachsten Ausführungsform ist der mit gestrichelten Anschlüssen dargestellte Öffner (S1) jedoch ganz weggelassen und der Überstrombegrenzer (1) in Reihe in die zu schützende Stromleitung (5) geschaltet. Der Überstrombegrenzer (1) kann weitere Parallelstromzweige oder nur einen Teil der in Fig. 1 gezeigten 4 Stromzweige aufweisen.

In einem 1. Parallelstromzweig zu dem Schalter (S1) ist ein Supraleiter bzw. 1. Hochtemperatursupraleiter (SLa) mit einem Schalter (Sa) in Reihe geschaltet, der durch ein externes Steuersignal (Sta) steuerbar ist. In einem 2.
Parallelstromzweig zu dem Schalter (S1) ist ein Supraleiter bzw. 2. Hochtemperatursupraleiter (SLb) mit einem Schalter (Sb) in Reihe geschaltet, der durch ein externes Steuersignal (Stb) steuerbar ist. Die Schalter (Sa) und (Sb) sind vorzugsweise als Wechselschalter ausgebildet, wobei bei geschlossenem Schalter (Sa) der Schalter (Sb) geöffnet ist und umgekehrt. Damit kann wahlweise der 1.
Hochtemperatursupraleiter (SLa) oder der 2.
Hochtemperatursupraleiter (SLb) zugeschaltet werden. Mit dieser Redundanz erreicht man eine kürzere Erholzeit, d. h., man kann nach einer Überstrombegrenzung diese nach einer kürzeren Dauer wieder aufheben. Werden die beiden Schalter (Sa, Sb) gleichsinnig betrieben, so kann die Nennleistung des Überstrombegrenzers (1) verdoppelt werden, wobei keine kürzere Erholzeit erreichbar ist.

In einem 3. Parallelstromzweig zu dem Schalter (S1) ist ein nichtsupraleitender, ohmscher Widerstand (2) geschaltet, der auch als direkter Bypaßwiderstand zu jedem der beiden 1. und 2. Hochtemperatursupraleiter (SLa) und (SLb) vorgesehen sein kann, wie es gestrichelt angedeutet ist.

In einem 4. Parallelstromzweig zu dem Schalter (S1) ist eine Drosselspule bzw. ein induktiver Widerstand (3) mit einem Schalter (S3) in Reihe geschaltet, der durch ein externes Steuersignal (St3) steuerbar ist. Durch die Drossel (3) wird eine zusätzliche Begrenzung eines Stromanstiegs bewirkt. Bei Bedarf kann die Drossel (3) mittels des Schalters (S3) abgeschaltet werden.

Fig. 2 zeigt einen Überstrombegrenzer (1') mit n (n>=1) in Reihe geschalteten Hochtemperatursupraleitern (SL1 - SLn), welche mit einem Schalter (S4) in Reihe geschaltet sind, der durch ein externes Steuersignal (St4) steuerbar ist. Parallel zu jedem dieser n Hochtemperatursupraleiter (SL1 - SLn) ist je ein Varistor (U1 - Un) geschaltet. Die Varistoren garantieren, dass der Spannungsabfall an jedem der Supraleiter (SL1 - SLn) einen maximalen Wert nicht überschreitet.

Fig. 3 zeigt einen Überstrombegrenzer (1") mit einem 1. und einem 2. Stromzweig, welche denen des Überstrombegrenzers (1) von Fig. 1 entsprechen. Anstelle von Varistoren (U1 - Un) gemäß dem Überstrombegrenzer (1') von Fig. 2 sind hier Drosselspulen bzw. induktive Widerstände (Z1 - Zn) zu den in Reihe geschalteten Supraleitern (SL1 - SLn) des 1. Stromzweigs (SLa) parallelgeschaltet. Der 2. Stromzweig (SLb) weist einen einzigen Hochtemperatursupraleiter auf, welcher durch mindestens einen Abgriff in Abschnitte unterteilt ist. Zu diesen Abschnitten sind ebenfalls Drosselspulen bzw. induktive Widerstände (Z1' - Zn') parallelgeschaltet.

In einem Parallelstromzweig zu einer Reihenschaltung von Schalter (Sa, S4) und Hochtemperatursupraleitern (SLa, SL1 - SLn) ist eine Drossel bzw. ein induktiver Widerstand (3) geschaltet. Ohne den induktiven Widerstand (3) fliesst der begrenzte Kurzschluss- oder Überstrom während längerer Zeit durch den Supraleiter (Sla, SL1 - SLn), wodurch sich dieser aufheizt und die nachfolgende Erholzeit einige Sekunden beträgt. Erfindungsgemäss wird der Schalter (Sa, S4) nach erfolgter Kurzschlussstrombegrenzung geöffnet, und der Strom fließt nur noch über den induktiven Widerstand (3). Dies geschieht bei Wechselstromnetzen vorzugsweise beim ersten Nulldurchgang des Stromes durch den Schalter (Sa, S4) nach dem Kurzschluss. Durch eine geeignete Bemessung des induktiven Widerstandes (3) kann eine vorgebbar kleine Erholzeit erreicht werden.

Anstelle mehrerer Hochtemperatursupraleiter (SL1 - SLn) kann ein einziger Hochtemperatursupraleiter (SLa) mit mehreren Abschnitten bzw. Abgriffen verwendet werden, wie es aus Fig. 3 ersichtlich ist.

Die zu den Hochtemperatursupraleitern (SLa, SLb) parallelgeschalteten Bauelemente (Z1 - Zn, Z1' - Zn') sollten so bemessen sein, daß im Normalfall kein Strom über sie fließt, während sie nach einer Beschädigung eines der Hochtemperatursupraleiter (SLa, SLb) oder eines Abschnitts eines solchen diesen überbrücken und so den Gesamtausfall des Überstrombegrenzers (1, 1', 1") bei nur geringfügig erhöhten Verlusten verhindern.

Die Schalter (S1, S3, S4, Sa, Sb) können mechanisch oder elektromagnetisch oder mit einem Schaltelement aus einer Formgedächtnislegierung betrieben werden.

### Ausführungsbeispiel 1:

Bei einem Überstrombegrenzer (1') gemäß Fig. 2 für eine Nennspannung von 10 kV und einen Nennstrom von 200 A wurden 20 Varistoren (U1 - Un) mit einer Schaltspannung von je 550 V parallel zu einzelnen Segmenten oder Abschnitten des 1. Hochtemperatursupraleiters (SLa) geschaltet.

### Ausführungsbeispiel 2:

Bei einem Überstrombegrenzer (1') gemäß Fig. 2 für eine Nennspannung von 10 kV und einen Nennstrom von 200 A wurde ein einziger induktiver Widerstand (3) mit einer Induktivität von 50 mWb/A zu der Reihenschaltung aus Schalter (S4) und Hochtemperatursupraleiter (SL1 - SLn) parallelgeschaltet (ohne Varistoren (U1 - Un)). Nach einem Kurzschluß öffnete sich der Schalter (S4), und der Kurzschlußstrom floß über den induktiven Widerstand (3). Mit dieser Schaltung läßt sich eine praktisch beliebig kleine Erholzeit für den Überstrombegrenzer (1') erreichen.

### Ausführungsbeispiel 3:

Bei einem Überstrombegrenzer (1") gemäß Fig. 3 für eine Nennspannung von 10 kV und einen Nennstrom von 200 A wurden je 20 Drosselspulen bzw. induktive Widerstände (Z1 - Zn) bzw. (Z1' - Zn') mit einer Induktivität von je 2,5 mWb/A zu Abgriffen sowohl des 1. als auch des 2.
Hochtemperatursupraleiters (SLa, SLb) parallelgeschaltet.

### BEZEICHNUNGSLISTE

- 1, 1', 1": reversible Überstrombegrenzer
- 2: nicht supraleitender, ohmscher Widerstand
- 3, Z1 - Zn, Z1' - Zn': induktive Widerstände, Drosselspulen
- 4, U1 - Un: Varistoren
- 5: Stromleitung
- SL, SLa, SLb, SL1 - SLn: Hochtemperatursupraleiter
- Sa, Sb, S1 - S4: Schalter
- Sta, Stb, St1 - St4: Steuersignale für Schalter Sa, Sb, S1 - S4

## Patentansprüche

1. Vorrichtung zur Überstrombegrenzung, umfassend
a) eine erste Reihenschaltung aus mindestens einem ersten Hochtemperatursupraleiter (SLa) und einem ersten Schalter (Sa), und
b) einen induktiven Widerstand (3),
dadurch gekennzeichnet, daß
c) der induktive Widerstand (3) parallel zu der ersten Reihenschaltung angeordnet ist.

2. Vorrichtung zur Überstrombegrenzung nach Anspruch 1, dadurch gekennzeichnet, daß der induktive Widerstand (3) eine Drosselspule ist und dass sich der erste Hochtemperatursupraleiter (Sla) ausserhalb der Drosselspule befindet.

3. Vorrichtung zur Überstrombegrenzung nach Anspruch 1, dadurch gekennzeichnet, daß kein weiterer Widerstand in Reihe mit dem induktiven Widerstand (3) parallel zu der ersten Reihenschaltung geschaltet ist.

4. Vorrichtung zur Überstrombegrenzung nach Anspruch 1, dadurch gekennzeichnet, daß parallel zu der ersten Reihenschaltung eine zweite Reihenschaltung aus mindestens einem zweiten Hochtemperatursupraleiter (SLb) und einem zweiten Schalter (Sb) vorgesehen ist.

5. Vorrichtung zur Überstrombegrenzung nach Anspruch 4, dadurch gekennzeichnet, daß die beiden Schalter (Sa, Sb) entgegengesetzte Schaltzustände aufweisen.

6. Vorrichtung zur Überstrombegrenzung nach Anspruch 1, dadurch gekennzeichnet, daß in Reihe mit dem induktiven Widerstand (3) ein Schalter (S3) parallel zu der ersten Reihenschaltung geschaltet ist.

7. Vorrichtung zur Überstrombegrenzung nach Anspruch 1, dadurch gekennzeichnet, daß parallel zu mindestens zwei Abschnitten eines Hochtemperatursupraleiters oder parallel zu mindestens zwei in Reihe geschalteten Hochtemperatursupraleitern (SL1 - SLn) je ein induktiver Widerstand (Z1 - Zn; Z1' - Zn') oder ein Varistor (U1 - Un) geschaltet ist.

8. Verfahren zum Betrieb einer Vorrichtung zur Überstrombegrenzung nach einem der vorhergehenden Ansprüche, dadurch gekennzeichnet, dass der Schalter (Sa) nach erfolgter Überstrombegrenzung geöffnet wird.

9. Verfahren zum Betrieb einer Vorrichtung zur Überstrombegrenzung nach Anspruch 8, dadurch gekennzeichnet, dass der Schalter (Sa) annähernd beim ersten Nulldurchgang des Stromes nach erfolgter Überstrombegrenzung geöffnet wird.
